# EUROPEAN PATENT SPECIFICATION

(11) **EP 3 363 523 B1**
(45) Date of publication and mention of the grant of the patent: **07.02.2024**
(21) Application number: 18157938.4
(22) Date of filing: 21.02.2018
(51) Int. Cl.: B01D 53/14, B01D 53/62, B01D 53/78, C01D 7/00, C01B 32/50, C01D 7/18

(54) **A METHOD FOR LIMITING THE EMISSIONS OF CO2 IN SODA PROCESSES**
VERFAHREN ZUR BEGRENZUNG DER CO2-EMISSIONEN IN EINEM SODAVERFAHREN
PROCÉDÉ PERMETTANT DE LIMITER LES ÉMISSIONS DE CO2 DANS DES PROCÉDÉS DE SOUDE

(30) Priority: 21.02.2017 PL 42059017
(43) Date of publication of application: 22.08.2018
(73) Proprietor: CIECH R&D Sp. z o.o., 00-684 Warszawa (PL)
(72) Inventor: SKOWRON, Kazimierz, 88-100 Inowroclaw (PL); ZORAWSKI, Damian, 13-230 Lidzbark (PL); KIEDZIK, Lukasz, 88-100 Inowroclaw (PL); ZELAZNY, Ryszard, 88-100 Inowroclaw (PL); SZAJKOWSKA-KOBUS, Sylwia, 02-495 Warszawa (PL); WEGNER, Slawomir, 88-100 Inowroclaw (PL); SOBCZAK, Waldemar, 88-100 Inowroclaw (PL); KOWALIK, Henryk, 88-160 Janikowo (PL); HULISZ, Robert, 88-100 Inowroclaw (PL); SOBOLEWSKI, Aleksander, 41-800 Zabrze (PL); TATARCZUK, Adam, 41-800 Zabrze (PL); CHWOLA, Tadeusz, 41-807 Zabrze (PL); KROTKI, Aleksander, 44-353 Olza (PL); JASTRZAB, Krzysztof, 41-902 Bytom (PL); WIECLAW-SOLNY, Lucyna, 41-500 Chorzow (PL); SPIETZ, Tomasz, 43-308 Bielsko-Biala (PL); WILK, Andrzej, 44-100 Gliwice (PL); WACHOWIAK, Maciej, 88-100 Inowroclaw (PL)
(74) Representative: Patpol Kancelaria Patentowa Sp. z o.o.

(56) References cited:
- CN-A- 102 698 585
- DE-A1- 1 567 923
- KR-B1- 101 644 538
- Spektrum Verlag Spektrum Verlag: "Soda -Lexikon der Chemie", , 31 December 1998 (1998-12-31), XP055490498, Retrieved from the Internet: URL:https://www.spektrum.de/lexikon/chemie /soda/8545 [retrieved on 2018-07-05]

## Description

### Object of the invention

The present invention relates to an installation and a method for limiting the emission of CO₂ in a soda process, which process is a process of producing soda ash, baking soda or agricultural lime. The method according to the invention contributes to considerably limiting the emission of CO₂ into the atmosphere without a simultaneous increase of the operating costs of the process and can be successfully utilised in multi-tonne processes implemented using the Solvay method.

### Field of the invention

Due to the continually progressing global warming, as well as, considering the observed greenhouse effect related to the continuously increasing emission of carbon dioxide (CO₂), there is a constant demand for a continuous decrease in the emission of this gas, which may, to a considerable degree, contribute to environmental protection by decreasing partake of this phenomenon in those indeed undesired processes.

The sources of emission of greenhouse gases into the atmosphere, including in particular the emission of CO₂, are present in all areas of human life. And although it is still assumed that the amount of carbon dioxide emitted by sources of natural origin exceeds the amount of CO₂ originating from sources of anthropogenic origin at least several times, it is precisely the limitation of the emission of carbon dioxide related to human activity that constitutes to be one of the key challenges of contemporary science.

Efforts to limit the emission of CO₂ encompasses numerous branches of industry, also including soda industry. This happens due to the fact that the production of sodium carbonate and/or sodium bicarbonate is inseparably related to the emission of carbon dioxide. For example, during starting or stopping of a lime kiln, 70 to 150 kg of CO₂ per a tonne of the produced soda ash are emitted into the atmosphere. Likewise, during production of purified bicarbonate, at the outlet of the column of purified bicarbonate, 50 to 300 kg of CO₂ are emitted per 1 tonne of the obtained product.

Therefore, although the Solvay method commonly used in the soda industry has been developed for over 150 years, there is still room for improvement of this production process, in particular in terms of maximising the degree of utilisation of CO₂ in this process and limiting its emission into the atmosphere.

With the worldwide scale of soda production reaching millions of tonnes per year, even small improvements relating to a better use of resources, as well as, limiting the consumption of energy and the amount of waste, indeed translate into exceptionally significant advantages related to the processes' economics, as well as its operating impact on environment.

The source of carbon dioxide and caustic lime calcinated during production of soda ash and backing soda are limestone and fuel used for decomposition thereof. Heat necessary for limestone decomposition comes from combustion of solid, liquid, or gaseous fuels.

Carbon dioxide and burnt lime are created as a result of the reaction of decomposition of calcium carbonate according to the reaction below:

CaCO₃ → CaO + CO₂

In the subsequent step of the soda process, i.e. during the carbonation of ammoniacal brine (saturating with carbon dioxide), the precipitation of raw sodium bicarbonate occurs. In general, the carbonation process of ammoniacal brine proceeds according to the following reaction:

NaCl + NH₃ + CO₂ + H₂O ↔ NaHCO₃ + NH₄Cl

This reaction is an equilibrium reaction in which the conversion of sodium chloride into sodium bicarbonate is not complete.

Actually, the carbonation of ammoniacal brine proceeds in numerous steps and already begins in the ammonia absorption node. The process of saturating purified brine with ammonia and carbon dioxide proceeds according to the following reactions:

NH₃ + H₂O ↔ NH₄OH

2 NH₃ + CO₂ + H₂O ↔ (NH₄) ₂CO₃

Raw sodium hydrogen carbonate precipitated in carbonation columns, after separation from the mother liquor on filters, is subjected to thermal decomposition in calcining furnaces according to the reaction:

2 NaHCO₃ ↔ Na₂CO₃ + CO₂ + H₂O,

and the obtained sodium carbonate is light soda ash. Light soda may be regarded as a ready commercial product, or, following further processing by hydration and drying, or densification, may be processed into dense soda.

Following separation of raw sodium hydrogen carbonate on filters, the remaining mother liquor is subjected to the ammonia recovery process, called distillation. Ammonium carbonate and hydrogen carbonate undergo thermal decomposition, to yield ammonia and carbon dioxide as products. The heat source is low-pressure steam. Ammonia contained in the form of ammonium chloride is released using lime milk and heating.

The decomposition processes of ammonium salts proceed according to the reactions:

NH₄HCO₃ + Q ↔ NH₃ + CO₂ +H₂O

(NH₄)₂CO₃ + Q ↔ 2 NH₃ + CO₂ + H₂O

2 NH₄Cl + Ca (OH) ₂ ↔ 2 NH₄OH + CaCl₂

NH₄OH +Q ↔ NH₃ + H₂O

All these reactions require supply of energy (heat), which is usually delivered to the process using water vapour as the carrier.

The resulting ammonia soda may be a resource for the creation of baking soda. The main stage for creating baking soda constitutes the carbonation process of a solution of sodium carbonate and sodium bicarbonate. This step also occurs in a custom-made carbonization column and involves saturating the aqueous solution of sodium carbonates with gaseous carbon dioxide. In this process, baking soda is created according to the reaction:

Na₂CO₃ + CO₂ + H₂O ↔ NaHCO₃

Absorption of carbon dioxide in the column is not complete and it depends on a concentration of sodium carbonate and hydrogen carbonate in the process operating conditions. As a result, the gas exiting carbonation columns contains up to 30 vol. % of CO₂.

Operation of the lime kiln plant and parameters achieved by this plant are of key significance for the economics of the entire production process. One especially important parameter is the CO₂ concentration in the produced kiln gas, that is usually in the range of 30 - 42 vol. %. This parameter has an important effect on the energy consumption for transport and compression of gaseous streams to carbonation columns in the production of soda ash and baking soda, on the yield of the carbonation process, on the size of crystals of the manufactured sodium bicarbonate and the humidity thereof, and, consequently, it is of key significance for consumption of energy and raw materials in the production process. The technological operation of lime kilns (including CO₂ concentration in the kiln gas) depends, inter alia, on the quality of the raw materials used in the process, i.e., limestone and fuel. Among the potential possibilities of reducing the cost of used fundamental raw material, namely limestone, there is, inter alia, use of fine limestone having a granulation in the range of 10 - 40 mm. However, use of fine limestone for the lime burning process is related to reduction of CO₂ concentration in the obtained kiln gas down to 25 - 35 vol. %, what is disadvantageous from the viewpoint of the carbonation process in production of soda ash and in production of baking soda, since this causes larger consumption of energy and raw materials.

Carbon dioxide contained in the kiln gas stream at a concentration of 30 - 42 vol. % (top gas, carbonation gas) and in the bottom gas stream (mixed gas) at a concentration of 60 - 85 vol. %, being supplied to the ammoniated brine carbonation plant in the production of soda ash process is not consumed completely (because of equilibrium constraints of the reactions), and its part, following purification of the gas stream from ammonia, is emitted to the atmosphere.

In installations for the implementation of soda processes, and thus the production of soda ash, baking soda or lime fertiliser, the stream of post-reaction gas from carbonization columns, containing unreacted amounts of carbon dioxide and ammonia, is subjected to purification of the excessive amounts of these gases. Such method of producing sodium carbonate, in which into a mother liquor the vapours which contain ammonia, and also some carbon dioxide, formed from the ammonium chloride and ammonium bicarbonate resulting from the ammonia regeneration step of the ammonia-soda method are introduced is well known, for example, from patent application DE 1567923. Usually, as presented in Fig. 1, this proceeds in rinsers of exhaust gases cooperating in series (101), which are supposed to lower the concentration of carbon dioxide and ammonia in exhaust gases from production. The rinser of exhaust gases (101) is sprayed from the carbonization columns (104) with purified brine (150, 250, 350, 450) for the recovery of ammonia. Carbon dioxide is virtually not soluble in purified brine. In the case of the method implemented according to state of the art, the gas (156) emitted into the atmosphere leaving the rinsers usually contains 8-16% of CO₂ and trace amounts of ammonia.

Incomplete carbon dioxide consumption results from equilibrium conditions of the chemical reactions occurring in carbonation columns. The optimised operation of the production process results in emission of 0.2 - 0.4 tonnes of 100% CO₂/tonne of soda (source: Reference Document on Best Available Techniques for the Manufacture of Large Volume Inorganic Chemicals - Solids and Others industry, August 2007, European Commission Document).

Since the sources of emission of carbon dioxide into atmosphere in a soda process, and in particular in the production of soda ash and baking soda, apart from an excessive stream of gas originating from decomposition of limestone, are streams of exhaust gases from the carbonation processes of ammoniacal brine containing unreacted carbon dioxide, and streams of exhaust gases from carbonation processes of a solution of sodium carbonate and bicarbonate containing unreacted carbon dioxide.

Therefore, there are numerous and diverse methods intended to limit emission of carbon dioxide into the atmosphere, and among them are these which involve extracting carbon dioxide and returning it into the production process. These are, in particular, the chemical absorption method, the temperature swing adsorption method (TSA), the pressure swing adsorption method (PSA), the cryogenic distillation method and the membrane method.

Among these listed above, the most commonly used methods for the extraction of CO₂ from industrial gases are chemical absorption methods. In such processes, amine solutions are used as absorbents, for example monoethanolamines (MEA), diethanolamines (DEA), diglycolamines (DGA), N-methyldiethanolamines (MDEA), 2-amino-2-methylpropanol (AMP) or piperazine (PZ) . Apart from amine solutions, aqueous ammonia solutions can also be used.

In case of use of chemical absorption methods (both with amines and ammonia), the gas subjected to purification connects, in counter flow, with stream of absorbent in an absorption column.

The following reactions occur during the connection of ammonia with carbon dioxide (1)-(4):

CO₂(g) ↔ CO₂(aq) (1)

2NH₃ (aq) + H₂O + CO₂ (aq) ↔ (NH₄)₂CO₃ (aq) (2)

(NH₄) ₂CO₃ (aq) + CO₂ (aq) + H₂O ↔ 2NH₄HCO₃ (aq) (3)

(NH₄)₂CO₃ (aq) ↔ NH₂COONH₄ (aq) + H₂O (4)

In a aqueous solution, ammonia and carbon dioxide create: ammonium carbonate (NH₄) ₂CO₃, ammonium bicarbonate NH₄HCO₃ and ammonium carbamate NH₂CO₂NH₄. The reactions (1) - (4) are reversible reactions and their direction depends on the pressure, temperature and concentrations of reagents in a system. All these reactions are exothermic, therefore, in lower temperatures their equilibrium switches to the right side. Thus, in case of absorption, it is recommended to use low temperatures, while the process of regeneration, i.e. transforming ammonium bicarbonate and carbamate into ammonium carbonate with release of the absorbed CO₂, occurs under conditions wherein heat energy is delivered.

Solution regeneration reactions along with the enthalpy of the given reaction are presented below:

NH₄HCO₃ (aq) ↔ NH₃ + H₂O + CO₂ (g) ΔH = 64,3 kJ/mol (5)

(NH₄)₂CO₃(aq) ↔ 2NH₃ + H₂O + CO₂(g) ΔH = 101,2 kJ/mol (6)

2NH₄HCO₃ ↔ (NH₄)₂CO₃(aq) + H₂O + CO₂(g) ΔH = 26, 9 kJ/mol (7)

NH₂COONH₄(aq) ↔ 2NH₃ + CO₂(g) ΔH =72,3 kJ/mol (8)

As indicated by the above reactions, all regeneration reactions are the exothermic reactions. Therefore, it is most preferable to conduct the regeneration process within the range of decomposition of ammonium bicarbonate into ammonium carbonate, since this reaction requires delivering the lowest amount of heat (26.9 kJ/mol).

Considering limiting emission of CO₂, numerous techniques of concentrating the resulting CO₂ are also used with equal success as methods involving the extraction and returning of carbon dioxide.

Methods leading to limiting undesired emission of CO₂ in soda processes have been described in abundant literature on this subject, including, in particular, numerous patent descriptions.

For example, patent application CN102698585 discloses method for recovering carbon dioxide in boiler flue gas in installation for producing soda comprising carbonization section, ammonia absorber and a rinsing zone, which carbon dioxide is not only used for the production of soda ash, but also can reduce the pollution to the atmosphere and achieve the purpose of "turning waste into treasure". Nevertheless this process requires increased energy expenditures to recover carbon dioxide with satisfactory yield.

Moreover, application WO2011/112069 describes a method of extracting CO₂ from exhaust gases, using a PSA adsorption module (pressure swing adsorption module) based on hydrotalcite and zeolite, with the formation of CO₂ enriched gas up to over 88% and up to 99.9 vol% translated into dry gas. According to the disclosure, the enriched CO₂ is subsequently used in ammoniacal brine (H₂O, NaCl, NH₄OH) to generate ammoniacal sodium bicarbonate, which in turn is calcinated to produce sodium carbonate. The disadvantage of this process is that caustic soda is most commonly produced by electrolysis of brine from sodium chloride (NaCl), therefore results in formation of gaseous chlorine (Cl₂) which must be used elsewhere.

In turn Publication US2014/0199228 describes a method for producing sodium carbonate by integrating the module of extracting CO₂ under pressure from exhaust gases with a method for producing sodium carbonate, in which CO₂, concentrated to over 80% and to 99.95% is subsequently used to produce ammoniacal sodium bicarbonate. A disadvantage of this process is partial under pressure operation during the desorption of enriched CO₂, from 8 to 25 bar, leading to problems related to corrosion and strength of the used steel.

On the other hand, Japanese patent application no. JP2011162404 discloses a method for producing soda by means of the Solvay method using limestone with high contaminant content as a substrate, in which method weak furnace gas originating from rotary lime kilns is subject to process of compressing carbon dioxide, to reach a concentration of 40 vol% or higher. The concentration is to proceed via contact with a liquid, selectively absorbing carbon dioxide, which liquid constitutes triethylene glycol, propylene carbonate, a aqueous amine solution, in particular a aqueous monoethanolamine solution (MEA), as well as, a aqueous potassium carbonate solution, and subsequently by desorption of CO₂. However, this publication does not mention a possibility to extract CO₂ using an amine absorbent for removal of carbon dioxide from other gases produced in the process.

Yet another patent publication EP1781400 discloses a method for purifying exhaust fumes and the absorption of carbon dioxide via solution or ammoniacal suspension (particularly suspension of ammonium salts) in a temperature of 0 - 20°C, preferably 0 - 10°C, described as the "*chilled ammonia process*" (CAP). In this method, the release of carbon dioxide occurs upon compressing said solution or ammoniacal suspension by a high-pressure pump, preferably up to a pressure of 10 - 28 bar, and heating it up to 100 - 150°C. Conducting absorption using a concentrated solution of ammonia (28 wt%) in low temperature improves the effectiveness of this process and decreases the emission of NH₃. On the other hand, regeneration occurring in a temperature of >120°C and under a pressure of >20 bar provides a compressed stream of CO₂ with a low water vapour and ammonia content. An inconvenience of this method is the necessity to use high pressures (which increases consumption of energy for media compression) with a simultaneous decrease in the temperature during the process, and moreover, causes tendency to precipitate sediments to overgrow the installation.

Another patent description US9469547 describes an integrated method for removing carbon dioxide and producing soda ash, in which method carbon dioxide is removed from a stream of process gas by absorption in ammoniacal solution, upon which it is desorbed in a regenerator producing a stream of gas rich in carbon dioxide and ammoniacal solution with low carbon dioxide. Preferably, said gas stream is directed from the regenerator directly into the carbonator, where carbonation of ammoniacal brine occurs by means of carbon dioxide. On the other hand, the fluid containing ammonia produced in the soda ash production process is returned by absorption of carbon dioxide from the said stream of process gas.

In turn publication WO2016/102568A1 discloses a method for producing sodium carbonate/bicarbonate with the concentration of carbon dioxide from weak furnace gas implemented by use of a variable-temperature concentrating module or by use of an amine-method concentrating module.

Yet another patent publication EP2910295 discloses a device and a method for integrated processing of exhaust gases and production of soda ash. The technical solution suggested in this document involves bonding carbon dioxide with exhaust gas in a carbonator using calcium oxide producing calcium carbonate and releasing carbon dioxide from calcium carbonate in a calciner. This process is integrated with the process of creating soda ash by means of the Solvay method.

All the CO₂ concentration processes disclosed so far have such a disadvantage that they are either highly energy-intensive, which makes the process considerably more expensive, or the obtained results are not satisfying.

Research conducted on the development and improvement of the soda process using the Solvay method for producing sodium carbonate intended to impede the emissions of CO₂, or at least drastically reduce these emissions, which was and is inseparably associated with considerable financial and energy expenditures resulting from the concentration of low concentration CO₂ produced during production processes, which connected with increase of the amount of used fossil fuels (gas, coal, fuel oil) taken into account in a general balance of CO₂ emitted, or possibly to be emitted, during such production. Therefore, the inventors of the present solution have sought such a method for limiting emission of CO₂ which would not increase, in a manner as significant as solutions known from state of the art, the costs of conducting the process not only by lowering energy expenditures, for extraction and concentration of CO₂, but also by reintroducing the recovered CO₂ into the process, and, at the same time, would provide the desired level of lowering the emission of CO₂ into the atmosphere.

In the literature there are certain reports related to the development of units for the recovery of CO₂ from gases such as, for example, coal gas, natural gas or exhaust gas, which units are based upon the use of amine absorbents, such as for example those described in publication US20160288049, however, these are useful in entirely different arrangements, in which such units constitute separate installation elements, which does not allow for simplifying and limiting, to a desirable degree, the expenditures related to conducting the CO₂ recovery process. The proposed solutions are also not adjustable to conducting multi-tonne processes.

The inventors of the present solution have developed a solution fully integrated with the soda process, adjusted to conducting it on a large scale, that provides high level of decreased emission of CO₂ without significant increase of the energy expenditures necessary for the implementation of this process.

### Short description of the invention

As mentioned above, in soda processes comprising the production of soda ash, baking soda or even lime fertiliser, the streams of residual gases are a significant source of the carbon dioxide emission into the atmosphere. This emission may be the source of significant costs related to environmental fees. The inventors of the present solution have concluded that use of CO₂ recovered specifically from the waste streams of the soda process, and therefore, returning the carbon dioxide present in residual streams into the process, not only in significant manner contributes to limiting the emission of this gas into the atmosphere, but also, to a noticeable degree, increases production capacity of a plant without the necessity to deliver additional resources in the form of limestone and coke for its firing.

This objective has been fulfilled by introducing into the installation of the soda process, after the carbonization column, before or after the zone of rinsing exhaust gases from the carbonization column in soda processes, a additional recovery unit of CO₂, defined in the present description as the DeCO₂ zone, to which zone process gas is introduced from the carbonization column. Preferably, in the case of a soda ash installation, this gas comprises from 8 to 18 vol% of CO₂ with temperature T falling within a range from 20 to 55°C, and pressure p falling within a range of 1-2 bar(a), and in which zone, the extraction of carbon dioxide occurs. In case of using the DeCO₂ zone in the baking soda installation, the residual gas from the carbonization column comprises from 15 to 30 vol% of CO₂, characterised by temperature T falling within a range from 60 to 90°C, and pressure p falling within a range of 1-2 bar (a).

The extraction of CO₂ from outflow streams is conducted using methods of chemical absorption known in the art. The inventors of the present solution have concluded that the most preferable methods are absorption methods using amine absorbents, such as solutions of ethanolamines (MEA, AMP), and absorption using ammonia solutions described as the ammonia method.

In a standard installation for the production of soda ash, the stream of post-reaction gas from carbonization columns **(104, 204, 304, 404),** containing unreacted amounts of CO₂ and NH₃, is subject to purification from the excessive amounts of these gases. As indicated above, gas leaving the rinser of exhaust gases in the soda ash process, emitted into the atmosphere, contains from 8 to 16% of CO₂. On the other hand, in the case of a baking soda installation, gas emitted into the atmosphere comprises from 15 to 30% of CO₂. Due to the solution proposed by the inventors of the present solution, the gas emitted into the atmosphere contains only 1 vol% of CO₂.

### Detailed description of the invention

The present invention provides a method for limiting the emission of CO₂ in soda processes and an installation for the implementation of the process.

Installation for producing soda according to the invention further to at least one carbonization column (104, 204, 304, 404), at least one ammonia absorber (102, 202, 302, 402) for the absorption of ammonia from weak gases and a rinser of exhaust gases (101, 201, 301, 401) comprises an integrated CO₂ recovery unit (DeCO2) for contacting streams of residual gases removed from the carbonization column (204, 304, 404) in the soda process with the absorbent, with obtaining, by absorption process, an absorbent enriched in carbon dioxide, and desorption of the previously absorbed carbon dioxide in a desorption column (224, 324, 424) of the integrated CO₂ recovery unit (DeCO2), with simultaneous regeneration of the absorbent, wherein the desorbed carbon dioxide is recirculated from integrated CO₂ recovery unit (DeCO2) back to the carbonization column (204, 304, 404), and wherein integrated CO₂ recovery unit (DeCO2)is placed downstream of at least one carbonation column (204, 304, 404) in the upper part of at least one carbonization column (204), or in the lower part of the rinser of exhaust gases between at least one ammonia absorber (302) and zone of rinsing exhaust gases (301), or in the upper part of at least one carbonization column (404), after at least one ammonia absorber (402) and directly after zone of rinsing exhaust gases (401), and wherein said integrated CO₂ recovery unit (DeCO2) is provided with a cooling zone located downstream of the desorption column (224, 324, 424), which cooling zone comprises at least one heat exchanger (225, 226, 227, to 425, 426, 427), where the stream of extracted carbon dioxide, after its desorption, is cooled down using a cooling agent selected from cooling water or other process streams used in the soda process, such as a stream of raw brine of temperature 15-30°C, or a stream of filtered mother liquor obtained upon separation of sodium bicarbonate of temperature 15-40°C, or a stream of salinated effluents of temperature 20-35°C, is introduced.

The object of the present invention is also a CO₂ recovery method, in the soda process, carried out in the installation of the invention, comprising the steps of:
a) contacting streams of residual gases, from the soda process removed from the carbonization column, with the absorbent, producing, by absorption, an absorbent enriched in carbon dioxide,
c) desorption of the previously absorbed carbon dioxide with simultaneous regeneration of the absorbent,
in which method the contacting step is conducted in the integrated recovery unit of CO₂ (DeCO₂), placed in the installation for the implementation of the soda process, downstream of at least one carbonization column **(204, 304, 404),** in the upper part of at least one carbonization column (204) or in the lower part of the rinser of exhaust gases between at least one ammonia absorber (302) and zone of rinsing exhaust gases (301) or after at least one ammonia absorber (402), in the upper part of the rinser of exhaust gases (401), and where the integrated recovery unit of CO₂ (DeCO₂) is provided with a cooling zone using as a cooling agent cooling water or other process streams used in the soda process, such as a stream of raw brine of temperature 15-30°C, or a stream of filtered mother liquor obtained upon separation of sodium bicarbonate of temperature 15-40°C, or a stream of salinated effluents of temperature 20-35°C.

In a preferable embodiment, between the step of contacting and the step of desorption, this method comprises an additional step b) for heating the absorbent enriched in carbon dioxide.

Particularly preferable, in the CO₂ recovery method, in a soda process, additionally, after the step of desorption, it comprises the following steps of:
d) cooling the regenerated absorbent, and
e) reintroducing the regenerated absorbent into the additional recovery unit of CO₂ (DeCO₂) .

In one of the embodiments of the invention, the additional recovery unit of CO₂ (DeCO₂) is placed in the upper part of at least one carbonization column **(204).**

In particularly preferable embodiment, if the zone of additional extraction (DeCO₂) is introduced in the baking soda installation residual gas containing 15 to 30 vol% of CO₂ with temperature T from 60 to 90°C and under pressure p = 1-2 bar(a) is introduced into the additional recovery unit of CO₂ (DeCO₂) .

In another embodiment of the invention, the additional recovery unit of CO₂ is placed downstream of at least one carbonization column **(304),** in the lower part of the rinser of exhaust gases between at least one ammonia absorber (302) and zone of rinsing exhaust gases **(301)** or, according to another embodiment of the invention, is placed downstream of at least one carbonization column **(404),** after at least one ammonia absorber **(402)** in the upper part of the rinser of the exhaust gases **(401).**

Preferably, when the additional recovery unit of CO₂ (DeCO₂) is placed in the upper part of at least one carbonization column **(204),** residual gas with temperature T within a range from 40 to 55°C and under pressure p = 1-2 bar(a) is introduced into this zone.

In case when the additional recovery unit of CO₂ (DeCO₂) is placed downstream of at least one carbonization column **(304),** directly after at least one ammonia absorber **(302),** before the zone of rinsing exhaust gases **(301),** the residual gas with a temperature T within range from 20 to 50°C and under pressure p = 1-2 bar(a) is introduced into this zone.

In case when the zone of rinsing the exhaust gases (DeCO₂) is placed is placed downstream of at least one carbonization column **(404),** after at least one ammonia absorber **(402)** in the upper part of the rinser of the exhaust gases **(401),** the residual gas with temperature T within a range from 20 to 30°C and under pressure p = 1-2 bar (a) is introduced into this zone.

Preferably, the process of extracting CO₂ is conducted by means of absorption being physical or chemical absorption.

Preferably, the absorption is chemical absorption conducted under pressure within a range of 0.1-6 bar(a).

In a preferable embodiment of the invention, a solution comprising ammonia, preferably a solution with a concentration of 1-20%, is used as the absorption liquid. In such situation the residual gas contacts, in counter-flow, the stream of absorption liquid. Particularly preferably, during the contact of process gas with stream of absorption liquid inside the additional recovery unit of CO₂ DeCO₂, low temperature within a range of 10-50°C is maintained. In a particularly preferable embodiment of the invention, the solution of absorption liquid saturated with CO₂ is directed into the desorption column, heated up, upon which the absorption liquid is regenerated. According to a particularly preferable embodiment, the regeneration is conducted by introducing a stream of absorption liquid into the circulation of the ammonia solution in the soda process. Preferably, the circulation of ammonia solution in the soda process is refiled.

In another preferable embodiment of the invention, a solution using a waste stream or a condensate originating from a soda process is used as the absorption liquid. Preferably, such a solution of absorption liquid saturated with CO₂ is directed into the carbonization column or into a separate desorption column. In a particularly preferable embodiment, a condensate containing ammonia partially saturated with CO₂ (α = 0.28-0.3) is used as the absorption liquid.

In yet another preferable embodiment of the invention, solutions of chemical compounds such as amines, preferably with a concentration of 1% to 50%, are used as the absorption liquid.

Another preferable embodiment of the invention uses aqueous solutions comprising compounds of amino acids or products of reaction with amino acids, such as potassium glycinate.

According to another preferable embodiment of the invention, multi-component solutions, preferably mixtures of inorganic salts/amines, ionic liquids/amines, inorganic salts/compounds of amino acids or inorganic salts/products of reactions with amino acids such as potassium glycinate are used as the absorption liquid.

In yet another preferable embodiment of the invention, aqueous or non-aqueous solutions containing carbonate potassium salts, such as K₂CO₃, amounting to 20-40%, preferably 30% and 2-10% of amines with a high constant reaction rate, i.e., higher or equal to 4500 dm³/mol*s in a temperature of 25°C with carbon dioxide, possibly in combination with other inorganic salts activating the reaction of CO₂ into carbamate are used as the absorption liquid.

Preferably, the absorption liquid is regenerated by introducing a stream of absorption liquid into the desorption column. Particularly preferably, the absorption liquid is regenerated in a desorption column operating under a pressure of 0.2-6 bar(a), in a temperature of 70°C - 250°C, and it is particularly preferable when the desorption column operates in a temperature of 110°C - 130°C. According to a particularly preferable embodiment, the temperature in the process of regeneration is maintained using a heat carrier under a pressure up to 18 bar(a), more preferably water vapour under a pressure of 2 - 4 bar(a).

Preferably, water vapour is used as the heat carrier.

In another preferable embodiment, liquid and/or gaseous reaction streams from the soda process and their mixtures with water vapour are used as the heat carrier.

These heat carriers are delivered preferably in the stream in a membrane-based manner, or in a membrane-less manner.

In one of particularly preferable embodiments, streams present in the soda process are used as a heat carrier along with additionally used, preferably external sources of heat from outside the soda process.

According to a preferable implementation of methods according to the invention, the stream of extracted CO₂ leaving the desorption column is cooled down to obtain its high purity using a cooling agent. Preferably, cooling is conducted up to temperature 10°C - 40°C, particularly preferably in an exchanger **(225, 325, 425).** In a very preferable embodiment of the invention, cooling is continued in coolers **(226, 227, 326, 327, 426, 427).**

According to a preferable implementation of methods according to the invention, the regenerated stream of absorbent leaving the cross-flow exchanger **(222, 322, 422)** is cooled down to temperature 10°C - 40°C, particularly preferably in an end cooler **(220, 320, 420).**

Preferably, process streams originating from absorption coolers, supplied with water vapour under a pressure up to 18 bar(a), preferably 2-4 bar(a), and/or liquid and/or gaseous reaction streams from the soda production process and/or liquid and/or gaseous reaction streams and/or water are used as the cooling agent.

According to a preferable implementation of methods according to the invention, the additional recovery unit of CO₂ (DeCO₂ zone) contains poured or structural fillings for providing a sufficiently developed contact surface for the liquid phase of the absorbent and the gaseous phase of the process gas.

Pall rings with diameters of 50 - 80 mm are used as a preferable filling. Equally preferably, columns for the exchange of mass are used as a filling of the DeCO₂ zone, particularly preferably a tube column, a mechanical column, a shelf column, a valve column, a disc column, a sieve column, a slatted column, an overflow column, a spray column, a surface column, a cascade column, a barbotage column, a sparge column, a cyclone column or a column with a Venturi tube.

### Definitions

Definitions of terms useful for understanding the disclosure presented in the present description are listed below. However, it should be emphasised that in a situation of a conflict with definitions encountered in subject literature, definitions presented herein have priority. The commonly used terms **method, process** and **manner** have an equivalent meaning. **α** [mole CO₂/mole] - the carbon dioxide content of an absorbent, the molar ratio of CO₂ to groups reactive with CO₂ in absorbents.
**Absorbent** - a solution used for the extraction of CO₂ from process gases, present in the process of releasing/recovering CO₂
**Absorption** - part of the soda ash plant/process, where purified brine is saturated with ammonia contained in the ammoniated gas from distillation. Ammoniated brine is formed there.
**NH₃ absorber (102, 202, 302, 402)** - an apparatus for the absorption of ammonia from weak/lean gases.
**Absorption of CO₂** - a unit process in the process of releasing/recovering CO₂, involving the absorption of carbon dioxide my means of absorbents.
**Absorption of NH₃** - a part of the installation for the implementation of the soda ash process, where saturation of purified brine is conducted **(150, 250, 350, 450)** using the ammonia contained within ammoniacal gas from distillation, as a result of which process ammoniacal brine is produced **(152, 252, 352, 452).**
**Chemical absorption** - the absorption of carbon dioxide by means of absorbents as a result of a chemical reaction.
**Primary amine** - an amine having one substituent on an amine nitrogen atom.
**Tertiary amine** - an amine having three substituents on an amine nitrogen atom.
**Purified bicarbonate** - an intermediate product in the process of producing baking soda.
**Raw bicarbonate** - an intermediate in preparation of soda ash. The main component is NaHCO₃ (ca. 80 wt. %), with admixture of ammonium salts and water.
**Calcium chloride** - the main component is CaCl₂; by-product prepared from clear distiller effluents.
**Absorption cooler (chemical compressor)** - a device whose objective is to lower the temperature of the cooled environment, at the expense of the delivered energy. In absorption coolers energy is delivered in the form of heat.
**Drip cooler** - a gas-liquid heat exchanger whose one of heat exchange surfaces is sprayed by a liquid stream causing a decrease in temperature to the wet-bulb temperature (this is the lowest temperature to which with the given water content (and atmospheric pressure) a body can be cooled down by means of evaporation).
**Ionic liquids** - salts whose melting temperatures are lower than 100°C, and a large part of representatives of this class exhibit a liquid state already in room temperature. Due to its highly diverse and unique physico-chemical properties, these substances are used as absorbents for the CO₂ absorption process.
**Cooling agent** - a thermodynamic agent which participates in the exchange of heat in a cooling device, having a lower temperature than the agent which is being cooled down. Particularly useful cooling agents are cooling water and other process streams used for the production of soda, such as: a stream of raw brine with a temperature of 15 - 30°C, a stream of filtered mother liquor obtained upon separating sodium bicarbonate with a temperature of 15-40°C, or a stream of salinated effluents with a temperature of 20-35°C.
**Degradation of the absorption solution** - deterioration of the absorptive properties of the absorption solution (absorbent) that negatively affects the ability to absorb CO₂.
**Densification** - an increase in the density of the resulting product.
**Desorption of CO₂** - a unit process in the process of releasing CO₂, involving the release of carbon dioxide from absorbents.
**Carbon dioxide desorber** - plant for desorption of carbon dioxide from the saturated absorbent solution downstream the absorber.
**Distillation/regeneration of ammonia** - part of the soda ash plant/process, where ammonia in the form of ammonium salts contained in the mother liquor is recovered and returned to absorption in the form of gas. In this phase of the process, wastes are generated in the form of suspension of calcium carbonate and other substances insoluble in an aqueous solution of calcium chloride and sodium chloride; these wastes are called **distiller effluents/**waste waters.
**Carbon dioxide**/carbonic oxide**/CO₂** - a chemical compound; in the Solvay method is produced in the ammonia-soda process by lime burning and combustion of coke; other fuels, such as anthracite, gas, or fine coal, also can be used.
**Filtration** - part of the soda ash plant/process, where the raw bicarbonate precipitate is separated from the **mother liquor**/post-filtration lye.
**Lower gas/bottom gas/mixed gas** - gas having a carbon dioxide concentration most often in the range of 60 - 85 vol. %, following mixing the kiln gas and the calcination gas (>95 vol. % of CO₂) . It is supplied to the bottom part of a carbonation column (the ammonia-soda process).
**Upper gas/top gas** - a process gas, kiln gas, usually having a carbon dioxide concentration in the range of 30 - 42 vol. %; it is supplied to the bottom part of a carbonation column in the washing phase (the ammonia-soda process).
**Carbonator/carbonation gas** - a process gas, kiln gas, usually having a carbon dioxide concentration in the range of 30 - 42 vol. %; it is supplied to the bottom part of a carbonation column in the washing phase (the ammonia-soda process).
**Purified gas** - a process gas of CO₂ absorption leaving the CO₂ absorption column.
**Exhaust/residual gas from the soda ash process** - Outlet gas from soda ash - outlet gas from carbonation in the production of soda ash, containing 8 - 16 vol. % of CO₂.
**Exhaust/residual gas from the baking soda process** - Outlet gas from baking soda - outlet gas from carbonation in the baking soda production process, containing 15 - 30 vol. % of CO₂.
**Furnace gas** - Kiln gas - gas produced in lime kilns, usually containing 30 - 42 vol. % of CO₂.
**Weak furnace gas** - Lean kiln gas - kiln gas having a CO₂ concentration of 25 - 35 vol. %.
**Weak/diluted gases** - Lean gases/diluted gases - outlet gases from the soda ash production processes, baking soda production, and lean kiln gas
**CO₂ separation/recovery installation** - an installation for releasing carbon dioxide from a gas stream.
**Gas separation scrubber** - the scrubber for absorption of ammonia to obtain carbon dioxide.
**Limestone** - the fundamental mineral raw material for production of soda ash. Typically, a fraction having granulation in the range of 80 - 150 mm is used in the soda production process.
**Carbonisation/Carbonation** (in relation to a soda ash installation/plant) - part of the soda ash plant/process, where ammoniated brine is saturated with CO₂ containing gases. A raw bicarbonate suspension is formed. The process is carried out in a carbonation column.
**Carbonisation/Carbonation** (in relation to a baking soda installation/plant) - part of the baking soda plant/process, where the purified solution of sodium carbonate and hydrogen carbonate is saturated with carbon dioxide. A refined bicarbonate suspension is formed. The process is carried out in a carbonation column.
**Crystallisation/drying** - part of the soda ash plant/process that consists in crystallisation and drying of sodium carbonate monohydrate. Soda ash/dense calcined soda is formed.
**CO₂ absorption column** - an apparatus in the process of releasing CO₂, intended for the extraction of CO₂, where the bonding of carbon dioxide takes place.
**Desorption column** - an apparatus in the process of releasing CO₂ intended for the desorption of CO₂, where the release of CO₂ from the absorption solution (absorbent) takes place by means of the delivered heat energy.
**Water washing column** - an apparatus limiting the emission of ammonia and other undesired components with the exhaust gas into the atmosphere and additionally cleaning the resulting stream of carbon dioxide.
**Ammoniacal condensate**/Ammoniated condensate - the condensate resulting from cooling off-gas from the distillation process, a process liquid being a condensate produced as a result of cooling gas vapours from the NH₃ distillation process.
**Distilled condensate** - a process liquid being a condensate upon the removal of ammonia, the condensate after stripping ammonia.
**Process condensates from calcination/ Calcination process condensates** - aqueous solution of ammonium salts and of soda ash formed in the process of purification and cooling off-gas from calcining furnaces, process solutions being aqueous solutions of ammonium salts and soda ash produced in the process of purifying and cooling down gas vapours from calciners.
**Crystallisation/drying** - part of the soda ash plant/process that consists in crystallisation and drying of sodium carbonate monohydrate. Soda ash/dense calcined soda is formed.
**Slaking of burnt lime** - part of the soda ash process, consisting in quenching burnt lime with water, to yield **lime milk** required for ammonia recovery.
**Condensate mixer/cooler** - a device for making an appropriate solution of ammoniated condensates used in carbon dioxide absorption process
**Water vapour from post-distillation fluid decompressor/ Steam from expander of distiller effluents** - off-gas formed by expansion of the fluid exiting from the bottom part of the distillation apparatus, under pressure of 1.5 - 1.6 bar.
**Lime kilns** - part of the soda ash plant/process, where burnt lime and CO₂ containing gas are produced. Vertical/shaft kilns are most often used in soda industry; horizontal kilns are more rarely used. The raw materials are limestone and a fuel such as coke, anthracite, gas, fine coal.
**Exhaust gas rinser** - a part of the installation responsible for the absorption of ammonia from exhaust gases from the carbonization column.
**Gas separation scrubber** - the scrubber for absorption of ammonia to obtain carbon dioxide
**Gas separation rinser** - an apparatus of the soda ash process, being a column for the absorption of ammonia for obtaining a purified stream of carbon dioxide.
**End rinser/ Final scrubber** - scrubber for final purification of carbon dioxide from ammonia.
**Absorption capacity** - the measure of the ability of an absorption solution to bond carbon dioxide.
**CO₂ recovery process** - the extraction of carbon dioxide from process gases.
**Reclaimer** - a device in the process of releasing CO₂ in which the process of reclaiming an amine solution participating in the absorption of CO₂ is conducted.
**Reclaiming** - a process involving the removal of amine contaminants of various origin from absorption solutions by delivering a stream of heat. Due to reclaiming, the consumption of amines, the costs of filtration and the amount of sediment in the heat exchangers are reduced, which generally reduces the operating costs of an amine installation.
**Regeneration of the solution** - a unit process in the process of releasing CO₂, involving the release of previously absorbed carbon dioxide by delivering heat energy into the solution.
**Saturated solution** - an absorption liquid in the process of releasing CO₂, being saturated with carbon dioxide after the CO₂ absorption column.
**Compound solution** - mixtures of absorptive solutions in the process of releasing CO₂, comprising for example inorganic salts/amine, ionic liquids/amine.
**Regenerated solution** - absorption liquid in the process of releasing CO₂, being an outlet liquid from the desorption column, containing a low carbon dioxide content.
**Sequestration** - a process involving separation and extraction of carbon dioxide from process gases in order to limit its emission into the atmosphere, due to its use as a resource or storage.
**Condenser/Condensate mixer/cooler** - a device for making an appropriate solution of ammoniated condensates used in carbon dioxide absorption process, an apparatus present in the process of releasing CO₂, being a cooler condensing moisture from the gaseous stream.
**Ammoniacal brine/Ammoniated brine** - product of saturation of purified brine with the ammoniated gas from distillation. Depending on the absorption stage, it differs in ammonia concentration.
**Ammoniacal soda**/calcinated soda/Soda ash/calcined soda - the main component is Na₂CO₃; the product produced by an ammonia-soda process. The fundamental raw materials are: **purified brine** and **limestone.**
**Light soda ash, heavy soda ash**/Light soda, dense soda - grades of soda ash differing in granulation and bulk density.
**Baking soda**/ refined bicarbonate/refined sodium hydrogen carbonate - the main component is NaHCO₃; the raw materials for the production are soda ash and a CO₂ containing gas.
**Purified brine** - the halite solution purified from calcium and magnesium salts, a solution of rock salt upon purifying of calcium and magnesium salts.
**Rock salt** - its main component being NaCl, it is the basic resource for the production of soda ash.
**The efficiency of releasing CO₂** - an index present in the process of releasing CO₂, being the percentage of carbon dioxide removed from the stream of initial gas.
**DeCO₂** zone - a part (section) of an installation in which the extraction of carbon dioxide from exhaust gases occurs. Liquid to **gas ratio (L/G)** - an index present in the process of releasing CO₂, being a ratio of the absorbent stream to the amount of gas directed onto the column [kg of liquid/kg of gas] .
**Reaction rates** - the speed of adding or removing a reagent as a result of the course of a chemical reaction.
**Salinated effluents** - post-distillation/waste fluid.
**CO₂ disposal** - the method of utilising the extracted carbon dioxide.
**Burnt lime** - product of thermal decomposition of limestone, used for preparation of lime milk.
**Post-soda lime**/Lime fertilizer - solids contained in distiller effluents converted into calcium fertilizer (soil lime) for use in agriculture.
**Heat exchanger** - an apparatus in which the transfer of heat between the streams of a solution occurs.
**Cross-flow heat exchanger (222, 322, 422)** - an exchanger in which membrane-based exchange of heat between the saturated **(272, 372, 472)** and regenerated **(271, 371, 471)** solutions occurs.
**Rotavap** - a heating apparatus for solutions, intended to release gaseous components from solutions and/or to concentrate solutions.
**Steam generator** - a heat exchanger for producing steam without a furnace.
Compounds of **amino acids** or **products of reactions with amino acids** - free amino acids or inorganic salts (for example of potassium or sodium, such as sodium glycinate or potassium glycinate) of amino acids.
**Volatile compounds** - gaseous compounds with high vapour pressure emitted into the atmosphere.

Unless indicated otherwise, any pressure, specified in the present description in bars, is given in absolute values.

As indicated above, the inventors of the present solution have noticed the need to associate, more strictly than it is known from state of the art, the process of carbon dioxide extraction with existing installation for the implementation of a soda process used to produce soda ash, baking soda and lime fertiliser. The solution allows for overcoming inconveniences observed in solutions known from state of the art, including improvement in utilisation of resources used in soda processes and decreasing environmental impact of carbon dioxide emission.

These and other related objectives of the invention, such as delivery of a purer stream of CO₂ for further use in food processes, have been achieved due to the additional DeCO₂ zone proposed by the inventors of the present solution, which has been presented below in embodiment examples of this invention, which are presented in the drawings, in which:

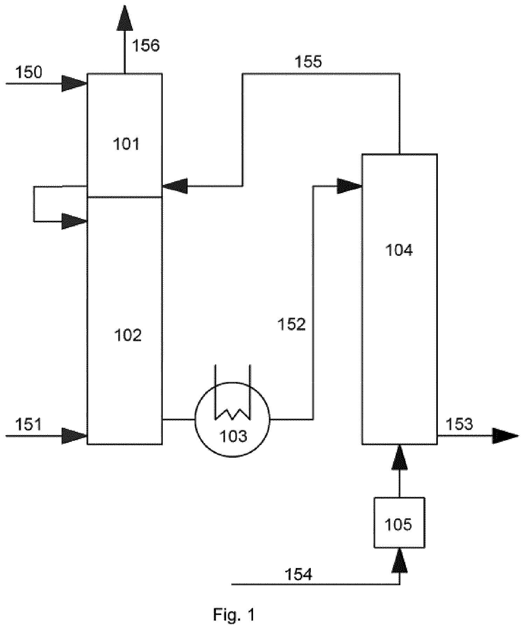

Fig. 1 presents a sample installation for the implementation of a soda process known from state of the art;
Fig. 2 presents an installation for the implementation of a soda process according to the invention, in which the DeCO₂ zone is placed in the upper part of the carbonization column;
Fig. 3 presents an installation for the implementation of a soda process according to the invention, in which the DeCO₂ zone is placed in the lower part of the rinser of exhaust gases;
Fig. 4 presents an installation for the implementation of a soda process according to the invention, in which the DeCO₂ zone is placed in the upper part of the rinser of exhaust gases;
Embodiments included in the present description are only meant to be illustrative and are not supposed to limit the scope of the invention in any manner.

The reference numbers used in the present description of state of the art and in the description of the solution according to the present invention are listed in Table 1 below.

**Table 1**

| *Number* | *Description* |
|---|---|
| 101,201,301,401 | Rinser of exhaust gases |
| 102,202,302,402 | NH₃ absorber (NH₃-ABM) |
| 103,203,303,403 | Drip cooler |
| 104,204,304,404 | Carbonization column |
| 105,205,305,405 | Compressor |
| 220,320,420 | End cooler |
| 221,225,226,227, | Cooler |
| 321, 325, 326, 327 | Cooler |
| 421,425,426,427 | Cooler |
| 222,322,422 | Cross-flow heat exchanger |
| 223,323,423 | Heater |
| 224,324,424 | Regenerator of the absorption solution |
| 150,250,350,450 | Purified brine |
| 151,251,351,451 | Gases from the regeneration of condensates |
| 152,252,352,452 | Ammonia brine |
| 270,370,470 | Ammonia brine |
| 154,254,354,454 | Furnace gas |
| 271,371,471 | Regenerated CO₂ solution |
| 272,372,472 | Saturated CO₂ solution |
| 273,373,473 | extracted CO₂ |
| 274,376,476 | Part of the saturated stream of CO₂ in the case of an ammonia absorbent |

### Embodiments examples of the invention

The present invention encompasses increasing the degree of reaction of CO₂ contained within reaction gas by use of an additional section of absorptive gas washing (DeCO₂ zones), as a result of which CO₂ contained within the gas is washed out and may be used or returned to the process. Such procedure allows for limiting emission of CO₂ since the extracted CO₂ **(273, 373, 473)** is returned to the process, which lowers consumption of the resources.

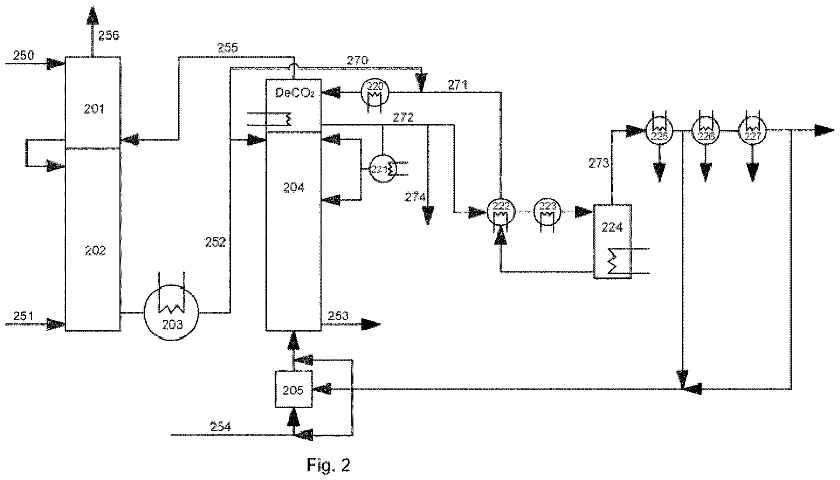

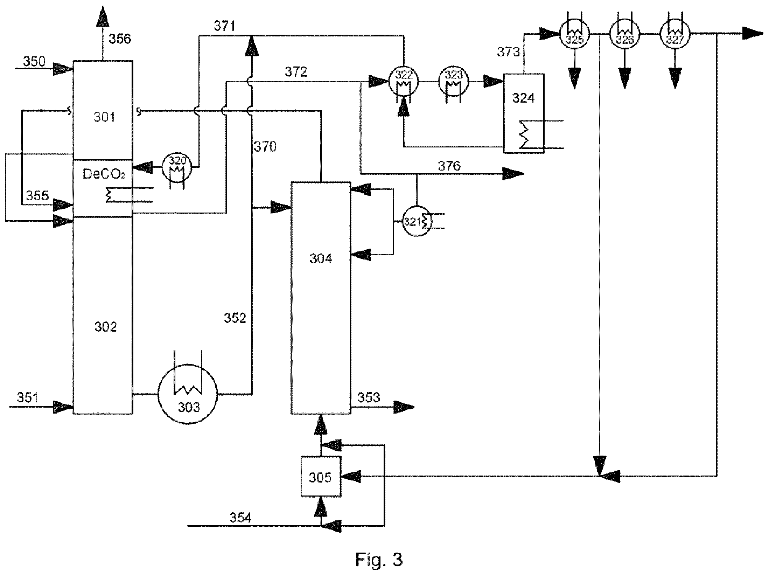

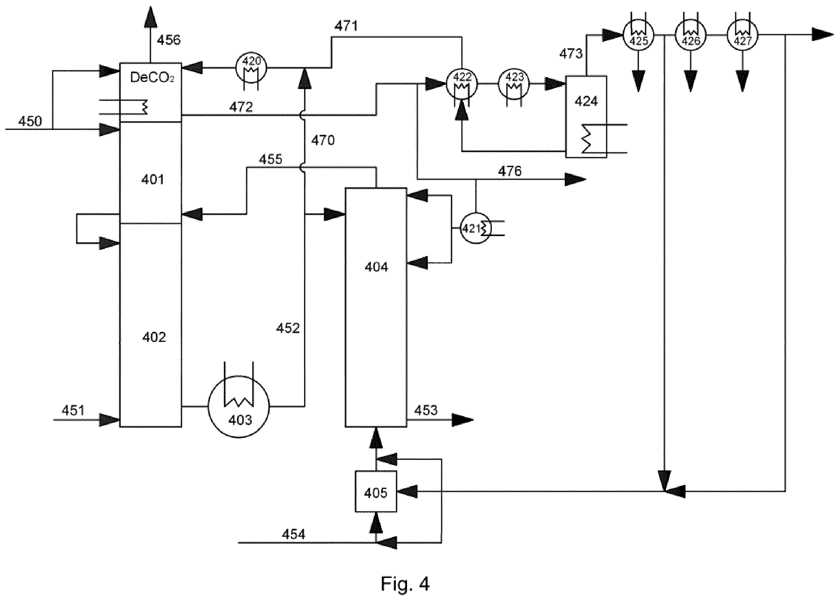

As presented in Fig. 2, according to one aspect of the present invention, the special additional zone for removing CO₂ from the process gas (DeCO₂) is situated on the carbonization column **(204).** However, this zone may also be situated on several carbonization columns **(204)** used in a soda process. The DeCO₂ zone may also be present in the process line before (Fig. 3) and/or after (Fig. 4) the rinser of exhaust gases **(301, 401)** arising in the process of carbonation implemented on the carbonization column **(304, 404)** of the soda ash process. Introducing a DeCO₂ zone on the carbonization column (or columns) **(204),** as presented in Fig. 2, or immediately after the ammonia absorber, before and/or after the rinser of exhaust gases **(301, 401)** arising to a considerable degree in the process of carbonation, affects improvement in efficiency/effectiveness of the device in terms of the utilisation of CO₂.

The process gas from the carbonization column introduced into the DeCO2 zone contains from 10 to 18 vol% of CO₂ and it is characterised by temperature T within a range from 40 to 55°C and pressure p falling within a range of 1-2 bar(a).

An improvement in the efficiency of the rinser of exhaust gases **(101, 201, 301, 401)** in terms of removing CO₂ can be provided by placing in an existing soda installation an additional CO₂ removal zone (DeCO₂) or by introducing such a zone into a new soda installation.

The DeCO₂ zone is placed in the lower part of the rinser **(301),** as it is presented on the layout shown in Fig. 3. In such an implementation of the invention, the process gas, from the carbonization column or from an array of carbonization columns, comprising from 10 to 18 vol% of CO₂ (T = 20 - 50°C, p = 1-2 bar(a)) enters the DeCO₂ zone.

In another embodiment the DeCO₂ zone is placed above the rinser of exhaust gases **(401).** Residual gas from the rinser **(401),** still comprising in its composition 8 - 16 vol% of CO₂ (T = 20 - 30, p = 1-2 bar (a)) is delivered into the DeCO2 zone placed in such a manner.

In the DeCO₂ zone the process of purifying process gas of CO₂ is conducted using chemical absorption.

It is preferable for the CO₂ content of the gas delivered from the DeCO₂ zone to be reduced to a level of 1 vol%. However, it is worth to conduct the process with a lower, meaning a partial reduction of the emitted CO₂ to a level at which the final value of CO₂ concentration in the gas falls within a range from 1 vol% to 9 vol%.

In the case of the proposed solution, the DeCO₂ zone serves the function of a counter-flow absorption column, to which, depending on the specific implementation of the invention, to the lower part, gas with a specified carbon dioxide content is delivered. The regenerated solution of the absorbent **(271, 371, 471)** with a low degree of carbon dioxide saturation is introduced into the upper part of the DeCO₂ zone. The regenerated solution absorbs chemically carbon dioxide contained in the flowing gas, producing chemical compounds with impermanent bonds. Subsequently, the saturated carbon dioxide absorbent **(272, 372, 472)** leaving the DeCO₂ zone is heated in the heat exchanger **(222, 322, 422)** and/or heater **(223, 323, 423)** to a temperature within a range of 80-105 °C, using heat carriers listed in the present description, upon which it is directed to the desorption column **(224, 324, 424).**

If the primary component of the absorbent is ammonia and its compounds, then a part or the entirety of the stream **(272, 372, 472)** is directed to the carbonization column (204, 304, 404) via the heat exchanger **(221, 321, 421).** Thermal desorption of CO₂ (in a temperature depending on the used absorbent) from a saturated solution of the absorbent **(272, 372,** 472) takes place in the desorption column. The desorption of CO₂ with simultaneous regeneration of the solution in a desorption column **(224, 324, 424)** is implemented by delivering energy, particularly heat, in the form of water vapour in a rotavap, placed in its lower part or an apparatus with external circulation. Successively, gaseous CO₂ with a small amount of water vapour **(273, 373, 473)** is released from the top of the desorption column **(224, 324, 424)** via coolers **(225, 325, 425)** and/or **(226, 326, 426)** and **(227, 327, 427)** for providing maximum condensation of water vapour.

Any cooling agent known in the art is used in the coolers **(225, 325, 425)** and/or **(226, 326, 426)** and/or **(227, 327, 427).** The contact between the gaseous stream of CO₂ **(273,373,473)** and the cooling agent in these coolers is realised depending on a specific embodiment of the invention: in a membrane-based manner, meaning only with the exchange of heat, or in a membrane-less manner, meaning with the exchange of heat and mass. In the embodiment of the invention in which membrane-free contact is used, the gas contacts and mixes directly with the cooling agent. An advantage of such a solution is that the cooling agent absorbs the ammonia contained in gaseous CO₂. Then, when it is not returned into the process into the compressor **(205, 305, 405)** or into its suction or into pumping, the stream freed of ammonia provides greater possibilities of its further use.

Prior to returning to the DeCO₂ zone, the regenerated solution of the absorbent **(271, 371, 471)** is cooled down, which is realised using a cross-flow heat exchanger **(222, 322, 422),** which conveys heat to a stream of saturated solution **(272, 372, 472).** If such a need arises, the regenerated solution **(271, 371, 471)** is additionally cooled down using an additional cooler **(220).**

In one embodiment of the invention, in which the primary component of the absorbent is ammonia and its compounds, a part of the stream of ammoniacal brine **(252, 352, 452)** in the form of a stream of ammoniacal brine **(270, 370, 470)** is directed respectively into the stream of a regenerated solution of the absorbent **(271, 371, 471).**

In another embodiment of the invention, in which the primary component of the absorbent is ammonia and its compounds, a part of the stream of ammoniacal brine **(272, 372, 472)** in the form of a stream **(274, 376, 476)** is directed respectively into a stream of a regenerated solution of the absorbent **(271, 371, 471).**

A significant element of the DeCO₂ zone is its fillings, poured or structural, whose task is to provide sufficiently developed contact surface of the liquid phase and the gaseous phase in an extent ensuring that the occurring mass exchange process could be sufficiently effective. Preferably, Pall rings with diameters of 50 - 80 mm are such a filling. However, columns for the exchange of mass, in the form of tube columns, mechanical columns, shelf columns (solutions in the form of a hood, a valve, a disc, a sieve, slatted overflow shelves), spray columns, surface columns, cascade columns, barbotage columns, sparge columns, cyclone columns or a column with a Venturi tube.

CO₂ absorption processes which may be used in the presented solution depending on the mechanism are divided into the processes of physical and chemical absorption. Processes used in the method implemented according to the invention utilise absorption methods developed originally for the removal of acidic components such as H₂S and CO₂ from natural gas, subsequently adapted to acquiring carbon dioxide from other gases. This technology enables the removal of approximately (75-96%) of CO₂ and obtaining a highly pure stream of CO₂ (with purity exceeding 99 vol%) .

The process of absorption and desorption of CO₂ is conducted, depending on the parameters of the purified gas and the destination of the resulting gas, within a pressure range from 0.1 bar (a) to 6 bar(a) .

Solutions containing ammonia originating from an external source and/or waste solutions or condensates originating from the production of soda are used as the absorption liquid.

In the case of using as the absorption liquid solutions utilising waste streams or condensates originating from the production of soda in certain embodiments of the invention, a certain amount of saturated carbon dioxide solution is directed to the top and/or to the central part of the carbonization column, and/or to a special separate desorption column.

In the case of using solutions of ammonia in the absorption process, the gas from which CO₂ is removed contacts in counter-flow the stream of absorbent in the DeCO₂ absorption zone.

In a aqueous solution, ammonia and carbon dioxide form ammonium carbonate (NH₄)₂CO₃, ammonium bicarbonate NH₄HCO₃ and ammonium carbamate NH₂CO₂NH₄, which is discussed in detail above. Due to the fact that these reactions are exothermic reactions, the absorption process is preferably conducted in low temperatures, such as 10-50.

Subsequently, the absorptive solution saturated with CO₂ is directed into the desorption column, where the solution regeneration process (CO₂ desorption process) occurs due to the impact of the delivered heat energy.

In a preferable embodiment of the invention, in the case of using in the DeCO₂ zone an ammonia solution as the absorbent, the regeneration of such an ammonia solution saturated with carbon dioxide (within a concentration range of 0.3-1.0 mol CO₂/mol NH₃) is conducted by introducing this stream into the existing circulation of the ammonia solution during the soda production process. A part or the entirety of the stream **(272, 372, 472)** in the form of a stream **(274, 376, 476)** may be directed into an existing circulation of the ammonia solution in the soda production process, where it is freed of a part of CO₂ contained within its composition, it regains the ability of further absorption of CO₂ and it is returned to the process by merging (not shown in the drawing) with the stream **(271, 371, 471).**

In the examples of the practical implementation of the invention using the solutions of ammonia as an absorptive liquid in the DeCO₂ zone, the specific streams from the soda process containing NH₃ may be the source of NH₃ for supplementing the circulating solution. In one of sample implementations, ammoniacal condensates or their solutions are used as such a liquid absorbent. The ammonia contained within the condensates is already partially saturated with carbon dioxide (α = 0.28-0.3), however, this value is lower than the equilibrium saturation (α = 0.6-0.9), which provides a relatively high absorption capacity of the condensate.

In other examples of practical implementation of the invention, solutions of chemical compounds such as amines, K₂CO₃, ionic liquids or compounds of amino acids are used as the absorptive substance (CO₂ absorbent) .

In yet another preferable implementations of the invention, compound solutions including, e.g. mixtures of inorganic salts/amine, ionic liquids/amine or inorganic salts/compounds of amino acids are used as a sorptive substance.

The use of this type of solutions according to the invention produces a number of advantages compared to traditional methods of absorption. CO₂ absorption arrangements being an object of the present invention, operating by way of the above-mentioned solutions, are characterised by a lower volatility, which results in a significant reduction of the node of purifying exhaust gases from the CO₂ separation installation (both of residual gas and pure CO₂ directed back to the soda production installation). In addition, the degradation of solutions based on the above-mentioned absorbents occurs to a considerably lower extent under the conditions of both absorption and desorption. This affects not only the purity of the resulting CO₂, but also a considerable decrease in operating costs. These types of solutions also exhibit lower energy consumption than solutions used in typical amine absorption methods.

In some forms of practical implementation of the invention, the process of regenerating compound solutions (CO₂ desorption process), upon saturating in the DeCO₂ zone with carbon dioxide, is conducted in a special separate desorption column.

In the case of using the special separate desorption column, operating under a pressure of 0.2 bar (a) to 6 bar (a) and in a temperature from 70°C to 250°C, and preferably 110°C - 130°C, the absorptive solution is subjected to regeneration by delivering a stream of heat providing proper temperature.

The components of the absorbent meant to supply the DeCO₂ zone or supplement the currently used solution are directed directly into the stream **(271, 371, 471).**

According to the present invention, water vapour under a pressure up to 18 bar(a), more preferably water vapour under a pressure of 2 - 4 bar(a), is used as a useful heat carrier for regeneration.

In other alternative embodiments of the invention, liquid and/or gaseous reaction streams from the soda production process and/or liquid and/or gaseous reaction streams and their mixtures with water vapour under a pressure up to 18 bar(a), and in particular under a pressure of 2 - 4 bar (a), are the heat carrier for regeneration.

The stream of heat is delivered to a regeneration zone in the apparatus in a membrane-based manner by means of a rotavap. Alternatively, the stream of heat is delivered to a regeneration zone in the apparatus in a membrane-less manner. The working agent is released partially or entirely by cooling a combined stream of waste CO₂ gas and a heat carrier received from the upper part of the desorption column.

In one of the embodiments, water vapour as well as other heat carriers for desorption originate from the steam generator. According to other alternative implementations of the invention, water vapour as well as other heat carriers for regeneration originate from other streams present in the soda production process, including in particular, in specific embodiments of the invention:
- water vapour originates from boilers/turbines with a pressure of 2-4 bar(a);
- water vapour originates from the decompression of condensates from calciners and driers of light soda ash, heavy soda ash and baking soda with a pressure up to 4 bar (a) ;
- Water vapour originates from the decompression of post-distillation fluid with a pressure up to 1.6 bar (a) and a temperature up to 110°C;
- vapours originate from the driers of calcined soda, heavy soda ash and baking soda with a temperature up to 130°C.
- the vapours originate from the distillation process with a temperature up to 90°C;
- waste fluid originates from the production of soda ash, and the process condensates from calcination, distillation with a temperature up to 115°C;
- water originates from the process coolers of absorption, carbonation and calcination with a temperature of 30 - 50°C;
- vapours originate from a IV degree evaporator apparatus with a temperature of approx. 120°C, process condensates from the installation of an evaporator station with a temperature of approx. 80°C - from the production of calcium chloride.

In a case when external sources of waste heat from the soda production process are used and they are insufficient, external sources of heat originating from outside the production process are used as an additional source of heat, such as:
- water vapour from a power plant and/or a CHP plant originating from the outlet of a steam turbine with a pressure up to 20 bar(a) and below,
- waste vapour from other industrial plants with a pressure up to 20 bar(a) and below,
- waste heat from other processes used in the production of water vapour by steam generators, recovery steam boilers, rotavaps etc., supplied with fuels, liquid and gaseous, as well as renewable sources.

Subsequently, the mixture of water vapour and the remaining components of the absorption solution and waste carbon dioxide received from the desorption column is cooled down to release the highest possible amount of liquid components and ammonia, and to obtain a stream of recovered CO₂ of high purity. In order to properly conduct the absorption process of CO₂ occurring in the DeCO₂ zone, it is necessary to deliver into the upper part of this zone a cooled down, regenerated absorption solution **(271, 371, 471),** meaning an absorption solution with a temperature of 10-40°C. This solution is subjected to cooling, because it is pumped into the DeCO₂ zone from the bottom of the desorption column, where it is preheated to a temperature above 100°C, and in the case of amine solutions to a temperature of 105-125°C. The first cooling proceeds in the main cross-flow exchanger **(222, 322, 422),** in which a membrane-regenerated solution hands over its heat to a saturated solution **(272, 372, 472)** with a temperature from 35-60°C. Further cooling of the solution to a proper temperature (25-40°C) is conducted in the end cooler **(220),** where cooling water or other process streams commonly used in soda processes, whose examples are indicated below, are used for cooling.

Another significant element of the CO₂ acquisition process is the cooling of the resulting stream of carbon dioxide to a temperature of 20-40°C in order to condense the moisture contained therein. In the traditional method, a high amount of cooling water is used to cool down the stream of CO₂. In order to decrease the amount of water used for cooling, other process streams are used in the examples of practical implementation of the present invention, used during the production of soda by means of the Solvay method, with a temperature below 30°C, such as, for example, raw brine. These streams enable cooling the process streams to a temperature of 10-40°C. If it is not possible to obtain temperatures of the solution within such a desired range using said process streams, in the method of obtaining CO₂ the process streams are used for partial (for example from 60°C to 50°C) cooling of CO₂ streams, which ultimately leads to decreasing the demand for cooling water. It is most justified to use process streams which are characterised by a low temperature (below 40°C), and for the requirements of the technological process it is desirable to heat them up to a higher temperature.

A significant aspect of effectively conducting the CO₂ absorption process occurring with the release of heat is providing in the DeCO₂ zone a proper cooling arrangement, using cooling water or other process streams used during production in an installation whose detailed examples are indicated in the following part of the description.

The stream of CO₂ acquired in a special desorption column **(224, 324, 424) (272, 373, 473)** upon proper preparation is introduced into the furnace gas directed into the carbonization column and/or into the baking soda installation and/or into the chemical sequestration and production of liquid and gaseous fuels and/or it is redirected to an external receiver as a final product, for example, to be used in food industry.

In the case of returning the resulting stream of CO₂ to the carbonization column, when the stream contains significant amounts of NH₃, the stream of CO₂, if it has the proper pressure of 3-6 bar (a), is delivered directly into the carbonization column. If this stream does not have a proper pressure, it is directed to the suction of furnace gas compressor **(205, 305, 405)** or between compression sections.

Most absorption processes require cooling the stream of the absorption solution down to temperatures of 10-40°C and/or require cooling the stream of waste CO₂ to a level of 20-40°C and/or require cooling the process gas via using a cooling agent, to condense the moisture contained therein.

In a practical implementation of the present invention, cooling is implemented using cooling water or other process streams used for the production of soda, such as: a stream of raw brine with a temperature of 15 - 30°C, a stream of filtered mother liquor obtained upon separating sodium bicarbonate with a temperature of 15-40°C or a stream of salinated effluents with a temperature of 20-35°C.

In a case when the DeCO₂ zone is not placed directly after the carbonization column, but it is placed before or after the rinser of exhaust gases, which embodiments are presented in a drawing in Fig. 3 and 4, then, when the ammonia content of exhaust gas is elevated, a gas rinsing section is used additionally in the DeCO₂ zone. In this section the gas is in a membrane-less contact with the washing agent on a separate filling, consisting of fillings as described above. Such an ammonia content which is higher than 50 ppm is considered elevated.

A sample washing agent used according to the invention is raw brine comprising sodium chloride, which is presented in Fig. 3 and Fig. 4, diluted ammoniacal brine, an acidic absorbent or mother lye. Upon extracting the maximum possible amount of ammonia from gas, the washing agent is released from the DeCO₂ zone and it does not contact the actual CO₂ absorption zone.

Examples of practical implementation discussed above are presented for illustrative purposes only and they are not supposed to limit the scope of the invention defined in the appended patent claims. Numerous modifications of the implementations of the invention disclosed herein falling within the scope of the invention and covered by the appended claims will be obvious to a person skilled in the art.

## Claims

1. Installation for producing soda comprising at least one carbonization column (104, 204, 304, 404), at least one ammonia absorber (102, 202, 302, 402) for the absorption of ammonia from weak gases and a rinser of exhaust gases (101, 201, 301, 401), **characterized in that** it further comprises an integrated CO₂ recovery unit (DeCO2) for contacting streams of residual gases removed from the carbonization column (204, 304, 404) in the soda process with the absorbent, with obtaining, by absorption process, an absorbent enriched in carbon dioxide, and desorption of the previously absorbed carbon dioxide in a desorption column (224, 324, 424) of the integrated CO₂ recovery unit (DeCO2), with simultaneous regeneration of the absorbent, wherein the desorbed carbon dioxide is recirculated from integrated CO₂ recovery unit (DeCO2) back to the carbonization column (204, 304, 404),
and wherein integrated CO₂ recovery unit (DeCO2)is placed downstream of at least one carbonization column (204, 304, 404) in the upper part of at least one carbonization column (204), or in the lower part of the rinser of exhaust gases, between at least one ammonia absorber (302) and zone of rinsing exhaust gases (301), or after at least one ammonia absorber (402), in the upper part of the rinser of exhaust gases (401),
and wherein said integrated CO₂ recovery unit (DeCO2) is provided with a cooling zone located downstream of the desorption column (224, 324, 424), which cooling zone comprises at least one heat exchanger (225, 226, 227, to 425, 426, 427), where the stream of extracted carbon dioxide, after its desorption, is cooled down using a cooling agent selected from cooling water or other process streams used in the soda process, such as a stream of raw brine of temperature 15-30°C, or a stream of filtered mother liquor obtained upon separation of sodium bicarbonate of temperature 15-40°C, or a stream of salinated effluents of temperature 20-35°C.

2. A CO₂ recovery method in a soda process carried out in the installation as defined in claim 1 comprising the steps of:
a) contacting streams of residual gases removed from the carbonization column in the soda process with the absorbent, with obtaining, by absorption process, an absorbent enriched in carbon dioxide,
c) desorption of the previously absorbed carbon dioxide with simultaneous regeneration of the absorbent,
**characterised in that**
the contacting step is conducted in the integrated recovery unit of CO₂ (DeCO₂) placed in the installation for implementation of a soda process downstream of at least one carbonization column (204, 304, 404), in the upper part of at least one carbonization column (204) or in the lower part of the rinser of exhaust gases between at least one ammonia absorber (302) and zone of rinsing exhaust gases (301) or after at least one ammonia absorber (402), in the upper part of the rinser of exhaust gases (401), and where the integrated recovery unit of CO₂ (DeCO₂) is provided with a cooling zone using, as a cooling agent, cooling water or other process streams used in the soda process, such as a stream of raw brine of temperature 15-30°C, or a stream of filtered mother liquor obtained upon separation of sodium bicarbonate of temperature 15-40°C, or a stream of salinated effluents of temperature 20-35°C.

3. The CO₂ recovery method in the soda process according to claim 2, wherein the additional recovery unit of CO₂ (DeCO₂) is placed in the upper part of at least one carbonization column (204), and residual gas of temperature T within a range from 40 to 55°C and under pressure p within a range of 1-2 bar is introduced into the additional recovery unit of CO₂ (DeCO₂).

4. The CO₂ recovery method in a soda process according to claim 2, wherein the additional recovery unit of CO₂ (DeCO₂) is located in the installation of baking soda, and into the additional recovery unit of CO₂ (DeCO₂) residual gas containing 15 to 30 vol% of CO₂ with temperature T from 60 to 90°C and under pressure p within a range of 1-2 bar is introduced.

5. The CO₂ recovery method in a soda process according to claim 2, wherein the additional recovery unit of CO₂ (DeCO₂) is placed downstream at least one carbonization column (304) between at least one ammonia absorber (302) and zone of rinsing exhaust gases (301), and that into the additional recovery unit of CO₂ (DeCO₂) residual gas of temperature T within a range from 20 to 50°C and under pressure of p = 1-2 bar is introduced.

6. The CO₂ recovery method in a soda process according to claim 2, wherein the additional recovery unit of CO₂ is placed downstream at least one carbonization column (304), after at least one ammonia absorber (402) and directly after zone of rinsing exhaust gases (401), and that into the additional recovery unit of CO₂ (DeCO₂) residual gas with temperature T within a range from 20 to 30°C and under pressure p = 1-2 bar is introduced.

7. The method according to any of claims 2-6, wherein in the additional recovery unit of CO₂ (DeCO₂) the process of extraction of CO₂ is conducted by absorption, the absorption being a physical absorption or a chemical absorption.

8. The method according to claim 7, wherein the absorption is a chemical absorption conducted under pressure within a range of 0.1-6 bar, and as the absorption liquid a solution containing ammonia, preferably a solution with a concentration of 1-20% is used.

9. The method according to claim 8, wherein the residual gas introduced into the additional recovery unit of CO₂ (DeCO₂) contacts in counter-flow the stream of absorption liquid, and that inside the additional recovery unit of CO₂ low temperature is maintained within a range of 10-50°C.

10. The method according to claim 9, wherein the solution of absorption liquid saturated with CO₂ is directed into the desorption column, heated up, upon which the absorption liquid is regenerated.

11. The method according to claim 10, wherein the absorption liquid is regenerated by introducing a stream of absorption liquid into the circulation of the ammonia solution in the soda process.

12. The method according to claim 7, wherein in that the absorption liquid is selected from a group comprising aqueous solutions containing amines, preferably of concentration 1% to 50%, aqueous solutions containing compounds of amino acids or products of a reaction with amino acids, such as potassium glycinate, aqueous or non-aqueous multi-component solutions and aqueous or non-aqueous solutions containing potassium carbonate salts, such as K₂CO₃, in quantity of 20-40%, preferably 30% and 2-10% amines in combination with other inorganic salts activating the reaction of CO₂ into the carbamate, wherein particularly preferable are aqueous solutions containing amines, in particular aqueous solutions containing amines of concentration 1% to 50%.

13. The method according to any of claims 10-12, wherein the absorption liquid is regenerated by introducing a stream of absorption liquid into the desorption column, and wherein, possibly prior to directing into the desorption column, the solution of absorption liquid saturated with CO₂ is heated up.

14. The method according to claim 13, wherein the absorption liquid regenerates in the desorption column operating under pressure of 0.2-6 bar, in a temperature of 70-250°C, and the temperature in the process of regeneration is maintained using a heat carrier under pressure up to 18 bar.

15. The method according to any of claims 10-14, wherein the stream of extracted CO₂ leaving the desorption column is cooled down to obtain a stream of waste CO₂ of high purity using a cooling agent.

16. The method according to claim 15, wherein cooling is conducted up to temperature of 10-40°C in a heat exchanger (225, 325, 425).

17. The method according to claim 15 or 16, wherein as the cooling agent process streams originating from absorption coolers, powered by water vapour under a pressure up to 18 bar, preferably 2-4 bar, and/or liquid and/or gaseous reaction streams from the soda production process and/or liquid and/or gaseous reaction streams and/or water are used.

18. The method according to any of claims 8-17, wherein the additional recovery unit of CO₂ contains poured or structural fillings for providing sufficiently developed contact surface for the liquid phase of the absorbent with the gaseous phase of the process gas.

## Patentansprüche

1. Anlage zur Herstellung von Soda, umfassend mindestens eine Carbonisierungssäule (104, 204, 304, 404), mindestens einen Ammoniakabsorber (102, 202, 302, 402) zur Absorption von Ammoniak aus schwachen Gasen und einen Abgasspüler (101, 201, 301, 401), **dadurch gekennzeichnet, dass** sie ferner eine integrierte CO₂-Rückgewinnungsanlage (DeCO2) umfasst, um den Restgasstrom, der aus der Carbonisierungssäule (204, 304, 404) im Rahmen des Soda-Verfahrens entfernt wurde, mit dem Absorptionsmittel in Berührung zu bringen, um durch die Absorption ein mit Kohlendioxid angereichertes Absorptionsmittel zu erhalten, und Desorption von zuvor absorbiertem Kohlendioxid in einer Desorptionssäule (224, 324, 424) der integrierten CO₂-Rückgewinnungsanlage (DeCO2) mit gleichzeitiger Regeneration des Absorptionsmittels zu erzielen, wobei das desorbierte Kohlendioxid von der integrierten CO₂-Rückgewinnungsanlage (DeCO2) zurück zur Carbonisierungssäule (204, 304, 404) eingeleitet wird,
und wobei die integrierte CO₂-Rückgewinnungsanlage (DeCO2) nach mindestens einer Carbonisierungssäule (204, 304, 404) im oberen Teil der mindestens einen Carbonisierungssäule (204) oder im unteren Teil des Abgasspülers zwischen mindestens einem Ammoniakabsorber (302) und der Zone des Abgasspülers (301) oder nach mindestens einem Ammoniakabsorber (402) im oberen Teil des Abgasspülers (401) angeordnet ist,
und wobei die genannte integrierte CO₂-Rückgewinnungsanlage (DeCO2) mit einer nach der Desorptionssäule (224, 324, 424) angeordneten Kühlzone versehen ist, wobei die Kühlzone mindestens einen Wärmetauscher (225, 226, 227 bis 425, 426, 427) umfasst, in dem der Strom von extrahiertem Kohlendioxid nach dessen Desorption mit Hilfe eines Kühlmittels gekühlt wird, wobei das Kühlmittel ist gewählt entweder aus Kühlwasser oder anderen im Soda-Verfahren verwendeten Prozessströmen, wie der Strom roher Salzlauge mit Temperatur von 15 - 30°C oder der Strom gefilterter Mutterlauge, die bei der Trennung von Natriumbicarbonat mit Temperatur von 15 - 40°C entsteht, oder ein Strom von salzhaltigem Abwasser mit Temperatur von 20 - 35°C.

2. Ein Verfahren zur Rückgewinnung von CO₂ im Soda-Verfahren, stattfindend in der Anlage nach Anspruch 1, umfassend die Schritte:
a) Kontaktieren der Ströme von Restgasen, die aus der Carbonisierungssäule im Soda-Verfahren entfernt wurden, mit dem Absorptionsmittel, wobei im Absorptionsverfahren ein mit Kohlendioxid angereichertes Absorptionsmittel gewonnen wird,
c) Desorption von zuvor absorbiertem Kohlendioxid bei gleichzeitiger Regenerierung des Absorptionsmittels,
**dadurch gekennzeichnet, dass**
der Schritt des Kontaktierens in der integrierten CO₂-Rückgewinnungsanlage (DECO2) durchgeführt wird, die in der Anlage zur Durchführung des Soda-Verfahrens nach mindestens einer Carbonisierungssäule (204, 304, 404), im oberen Teil mindestens einer Carbonisierungssäule (204) oder im unteren Teil des Abgasspülers zwischen mindestens einem Ammoniakabsorber (302) und der Zone des Abgasspülers (301) oder nach mindestens einem Ammoniakabsorber (402) im oberen Teil des Abgasspülers (401) angeordnet ist, und wobei die integrierte CO₂-Rückgewinnungsanlage (DECO₂) mit einer Kühlzone versehen ist, in der als Kühlmittel Kühlwasser oder andere im Soda-Verfahren verwendeten Prozessströme verwendet werden, wie ein Strom von roher Salzlauge mit Temperatur von 15 - 30°C oder ein Strom von gefilterter Mutterlauge die bei der Trennung von Natriumbicarbonat mit Temperatur von 15 bis 40°C, entsteht, oder ein Strom von salzhaltigem Abwasser mit Temperatur von 20 bis 35°C.

3. Das Verfahren zur CO₂-Rückgewinnung im Soda-Verfahren nach Anspruch 2, wobei die zusätzliche CO₂-Rückgewinnungsanlage (DECO₂) im oberen Teil mindestens einer Carbonisierungssäule (204) angeordnet ist und Restgas mit Temperatur T von 40 - 55°C und Druck p von 1-2 bar in die zusätzliche CO₂-Rückgewinnungsanlage (DECO₂) eingeleitet wird.

4. Das Verfahren zur CO₂-Rückgewinnung im Soda-Verfahren nach Anspruch 2, wobei die zusätzliche CO₂-Rückgewinnungsanlage (DECO₂) in der Natronanlage angeordnet ist, und Restgas, das 15 bis 30 Vol.-% CO₂ mit Temperatur T von 60 bis 90°C und unter Druck p von 1-2 bar enthält, in die CO₂-Rückgewinnungsanlage (DECO₂) eingeleitet wird.

5. Das Verfahren zur CO₂-Rückgewinnung im Soda-Verfahren nach Anspruch 2, wobei die zusätzliche CO₂-Rückgewinnungsanlage (DECO₂) nach mindestens einer Carbonisierungssäule (304) zwischen mindestens einem Ammoniakabsorber (302) und dem Bereich des Abgasspülers (301) angeordnet ist, und das in die zusätzliche CO₂-Rückgewinnungsanlage (DECO₂) eingeleitete Restgas Temperatur T von 20 bis 50°C aufweist und unter Druck von p = 1-2 bar steht.

6. Das Verfahren zur CO₂-Rückgewinnung im Soda-Verfahren nach Anspruch 2, wobei die zusätzliche CO₂-Rückgewinnungsanlage nach mindestens einer Carbonisierungssäule (304) und nach mindestens einem Ammoniakabsorber (402) und direkt nach dem Bereich des Abgasspülers (401) angeordnet ist, und das in die zusätzliche CO₂-Rückgewinnungsanlage (DECO₂) eingeleitete Restgas Temperatur T von 20 bis 30°C aufweist und unter Druck p = 1-2 bar steht.

7. Ein Verfahren nach einem der Ansprüche 2 - 6, wobei der Prozess der Extraktion von CO₂ durch Absorption in der zusätzlichen CO₂-Rückgewinnungsanlage (DECO₂) stattfindet, wobei die Absorption eine physikalische oder eine chemische Absorption ist.

8. Ein Verfahren nach Anspruch 7, wobei die Absorption eine chemische Absorption ist, die unter Druck im Bereich von 0,1-6 bar stattfindet, und dazu eine Ammoniak enthaltende Lösung, vorzugsweise eine Lösung mit einer Konzentration von 1-20%, als Absorptionsflüssigkeit verwendet wird.

9. Das Verfahren nach Anspruch 8, wobei das in die zusätzliche CO₂-Rückgewinnungsanlage (DECO₂) eingeleitete Restgas im Gegenstrom mit dem Strom der Absorptionsflüssigkeit in Berührung kommt, und wobei innerhalb der zusätzlichen CO₂-Rückgewinnungsanlage eine niedrige Temperatur im Bereich von 10 - 50°C aufrechterhalten wird.

10. Das Verfahren nach Anspruch 9, wobei die Lösung der mit CO₂ gesättigten Absorptionsflüssigkeit in die Desorptionssäule eingeleitet und aufgeheizt wird, wodurch die Absorptionsflüssigkeit regeneriert wird.

11. Das Verfahren nach Anspruch 10, wobei die Absorptionsflüssigkeit regeneriert wird, indem ein Strom der Absorptionsflüssigkeit in den Kreislauf der Ammoniaklösung im Soda-Verfahren eingeleitet wird.

12. Das Verfahren nach Anspruch 7, wobei die Absorptionsflüssigkeit aus einer Gruppe ausgewählt wird, die wässrige Lösungen umfasst, die Amine enthalten, vorzugsweise mit Konzentration von 1 % bis 50 %, wässrige Lösungen, die Verbindungen von Aminosäuren oder Produkte der Reaktion mit Aminosäuren enthalten, wie Kaliumglycinat, wässrige oder nichtwässrige Mehrkomponentenlösungen und wässrige oder nichtwässrige Lösungen, die Kaliumcarbonatsalze, wie K₂CO₃, in einer Menge von 20-40%, vorzugsweise 30% und 2-10% Amine in Kombination mit anderen anorganischen Salzen, die die Reaktion von CO₂ zum Carbamat induzieren, enthalten, wobei besonders bevorzugt wässrige Lösungen sind, die Amine enthalten, insbesondere wässrige Lösungen, die Amine in Konzentration von 1% bis 50% enthalten.

13. Das Verfahren nach einem der Ansprüche 10 - 12, wobei die Absorptionsflüssigkeit regeneriert wird, indem ein Strom der Absorptionsflüssigkeit in die Desorptionssäule eingeleitet wird, und wobei, möglicherweise vor dem Einleiten in die Desorptionssäule, die Lösung der mit CO₂ gesättigten Absorptionsflüssigkeit erhitzt wird.

14. Das Verfahren nach Anspruch 13, wobei die Absorptionsflüssigkeit in der Desorptionssäule, die unter Druck von 0,2 - 6 bar arbeitet, bei Temperatur von 70 - 250°C regeneriert wird und die Temperatur während des Regenerationsprozesses mit Hilfe eines Wärmeträgers unter Druck von bis zu 18 bar aufrechterhalten wird.

15. Das Verfahren nach einem der Ansprüche 10 - 14, wobei der Strom von extrahiertem CO₂, der die Desorptionssäule verlässt, unter Verwendung eines Kühlmittels gekühlt wird, um einen Strom von gebrauchtem CO₂ mit hoher Reinheit zu erhalten.

16. Das Verfahren nach Anspruch 15, wobei die Kühlung bis Temperatur von 10 - 40°C in einem Wärmetauscher (225, 325, 425) durchgeführt wird.

17. Das Verfahren nach Anspruch 15 oder 16, wobei als Kühlmittel Prozessströme aus den Absorptionskühlern, die mit Wasserdampf unter Druck von bis zu 18 bar, vorzugsweise 2-4 bar, betrieben werden, und/oder flüssige und/oder gasförmige Reaktionsströme aus dem Sodaherstellungsverfahren und/oder flüssige und/oder gasförmige Reaktionsströme und/oder Wasser verwendet werden.

18. Das Verfahren nach einem der Ansprüche 8-17, wobei die zusätzliche CO₂-Rückgewinnungsanlage gegossene oder strukturelle Füllelemente enthält, um eine ausreichend große Kontaktfläche für die flüssige Phase des Absorptionsmittels mit der gasförmigen Phase des Prozessgases sicherzustellen.

## Revendications

1. Installation de production de soude comprenant au moins une colonne de carbonisation (104, 204, 304, 404), au moins un absorbeur d'ammoniac (102, 202, 302, 402) pour l'absorption de l'ammoniac des gaz faibles et un rinceur de gaz d'échappement (101, 201, 301, 401), **caractérisée en ce qu'**elle comprend en outre une unité intégrée de récupération de CO₂ (DeCO₂) pour mettre en contact des flux de gaz résiduels retirés de la colonne de carbonisation (204, 304, 404) dans un procédé de soude avec l'absorbant, an obtenant par le procédé d'absorption, un absorbant enrichi en dioxyde de carbone, et une désorption du dioxyde de carbone précédemment absorbé dans une colonne de désorption (224, 324, 424) de l'unité intégrée de récupération du CO₂ (DeCO₂), avec régénération simultanée de l'absorbant, le dioxyde de carbone désorbé étant recirculé de l'unité intégrée de récupération du CO₂ (DeCO₂) de retour vers la colonne de carbonisation (204, 304, 404),
et dans lequel l'unité intégrée de récupération du CO₂ (DeCO₂) étant placée en aval d'au moins une colonne de carbonisation (204, 304, 404) dans la partie supérieure d'au moins une colonne de carbonisation (204), ou dans la partie inférieure du rinceur de gaz d'échappement, entre au moins un absorbeur d'ammoniac (302) et une zone de rinçage des gaz d'échappement (301), ou après au moins un absorbeur d'ammoniac (402), dans la partie supérieure du rinceur de gaz d'échappement (401),
et dans lequel ladite unité intégrée de récupération du CO₂ (DeCO₂) étan dotée d'une zone de refroidissement située en aval de la colonne de désorption (224, 324, 424), laquelle zone de refroidissement comprend au moins un échangeur de chaleur (225, 226, 227, à 425, 426, 427), où le flux de dioxyde de carbone extrait, après sa désorption, est refroidi à l'aide d'un agent de refroidissement choisi parmi l'eau de refroidissement ou d'autres flux de traitement utilisés dans un le procédé de soude, tels qu'un flux de saumure brute d'une température de 15-30°C, ou un flux de liqueur mère filtrée obtenue lors de la séparation du bicarbonate de sodium d'une température de 15-40°C, ou un flux d'effluents salins d'une température de 20-35°C.

2. Procédé de récupération du CO₂ dans un procédé de soude réalisé dans l'installation telle que définie dans la revendication 1 comprenant les étapes suivantes :
a) mise en contact des flux de gaz résiduels retirés de la colonne de carbonisation dans un procédé de soude avec l'absorbant, afin d'obtenir, par absorption, un absorbant enrichi en dioxyde de carbone,
c) désorption du dioxyde de carbone précédemment absorbé avec régénération simultanée de l'absorbant,
**se caractérise en ce que**
l'étape de mise en contact est réalisée dans l'unité intégrée de récupération du CO₂ (DeCO₂) placée dans l'installation pour la mise en oeuvre d'un procédé de soude en aval d'au moins une colonne de carbonisation (204, 304, 404), dans la partie supérieure d'au moins une colonne de carbonisation (204) ou dans la partie inférieure du rinceur de gaz d'échappement entre au moins un absorbeur d'ammoniac (302) et la zone de rinçage des gaz d'échappement (301) ou après au moins un absorbeur d'ammoniac (402), dans la partie supérieure du rinceur de gaz d'échappement (401),
et lorsque l'unité intégrée de récupération du CO₂ (DeCO₂) est dotée d'une zone de refroidissement, ils sont utilisés, comme agent de refroidissement, de l'eau de refroidissement ou d'autres flux de traitement utilisés dans un procédé de la soude, tels qu'un flux de saumure brute d'une température de 15-30°C, ou un flux de liqueur mère filtrée obtenue lors de la séparation du bicarbonate de sodium d'une température de 15-40°C, ou un flux d'effluents salins d'une température de 20-35°C.

3. Procédé de récupération du CO₂ dans un procédé de soude selon la revendication 2, dans lequel l'unité supplémentaire de récupération du CO₂ (DeCO₂) est placée dans la partie supérieure d'au moins une colonne de carbonisation (204), et un gaz résiduel d'une température T comprise entre 40 et 55°C et d'une pression p comprise entre 1 et 2 bars est introduit dans l'unité supplémentaire de récupération du CO₂ (DeCO₂).

4. Procédé de récupération du CO₂ dans un procédé de soude selon la revendication 2, dans lequel l'unité supplémentaire de récupération du CO₂ (DeCO₂) est située dans l'installation de bicarbonate de soude, et un gaz résiduel contenant 15 à 30% de CO₂ avec une température T de 60 à 90°C et sous une pression p comprise entre 1 et 2 bars est introduit dans l'unité supplémentaire de récupération du CO₂ (DeCO₂).

5. Procédé de récupération du CO₂ dans un procédé de soude selon la revendication 2, dans lequel l'unité supplémentaire de récupération du CO₂ (DeCO₂) est placée en aval d'au moins une colonne de carbonisation (304) entre au moins un absorbeur d'ammoniac (302) et la zone de rinçage des gaz d'échappement (301), et dans lequel un gaz résiduel dont la température T se situe dans une plage de 20 à 50°C et sous une pression de p = 1-2 bar est introduit dans l'unité supplémentaire de récupération du CO₂ (DeCO₂).

6. Procédé de récupération du CO₂ dans un procédé de soude selon la revendication 2, dans lequel l'unité supplémentaire de récupération du CO₂ est placée en aval d'au moins une colonne de carbonisation (304), après au moins un absorbeur d'ammoniac (402) et directement après la zone de rinçage des gaz d'échappement (401), et dans lequel un gaz résiduel dont la température T se situe dans une plage de 20 à 30°C et sous une pression p = 1-2 bar est introduit dans l'unité supplémentaire de récupération du CO₂ (DeCO₂).

7. Procédé selon l'une des revendications 2 à 6, dans lequel, dans l'unité supplémentaire de récupération du CO₂ (DeCO₂), le procédé d'extraction du CO₂ est mené par absorption, l'absorption étant une absorption physique ou chimique.

8. Procédé selon la revendication 7, dans lequel l'absorption est une absorption chimique effectuée sous une pression comprise entre 0,1 et 6 bars, et dans lequel on utilise comme liquide d'absorption une solution contenant de l'ammoniaque, de préférence une solution ayant une concentration de 1 à 20%.

9. Procédé selon la revendication 8, dans lequel le gaz résiduel introduit dans l'unité supplémentaire de récupération du CO₂ (DeCO2) entre en contact à contre-courant avec le flux de liquide d'absorption, et où, à l'intérieur de l'unité supplémentaire de récupération du CO₂, la basse température est maintenue dans une plage de 10 à 50°C.

10. Procédé selon la revendication 9, dans lequel la solution de liquide d'absorption saturée en CO₂ est dirigée dans la colonne de désorption, chauffée, sur laquelle le liquide d'absorption est régénéré.

11. Procédé selon la revendication 10, dans lequel le liquide d'absorption est régénéré en introduisant un courant de liquide d'absorption dans la circulation de la solution d'ammoniac dans un procédé de soude.

12. Procédé selon la revendication 7, dans lequel le liquide d'absorption est choisi d'un groupe comprenant des solutions aqueuses contenant des amines, de préférence d'une concentration de 1% à 50%, des solutions aqueuses contenant des composés d'acides aminés ou des produits d'une réaction avec des acides aminés, tels que le glycinate de potassium, des solutions aqueuses ou non aqueuses à composants multiples et des solutions aqueuses ou non aqueuses contenant des sels de carbonate de potassium, tels que K₂CO₃, tels que K₂CO₃, en quantité de 20 à 40%, de préférence 30% et 2 à 10% d'amines en combinaison avec d'autres sels inorganiques activant la réaction du CO₂ en carbamate, les solutions aqueuses contenant des amines étant particulièrement préférables, en particulier les solutions aqueuses contenant des amines d'une concentration de 1% à 50%.

13. Procédé selon l'une des revendications 10 à 12, dans lequel le liquide d'absorption est régénéré en introduisant un flux de liquide d'absorption dans la colonne de désorption, et dans lequel, éventuellement avant d'être dirigée dans la colonne de désorption, la solution de liquide d'absorption saturée en CO₂ est chauffée.

14. Procédé selon la revendication 13, dans lequel le liquide d'absorption se régénère dans la colonne de désorption fonctionnant sous une pression de 0,2-6 bar, à une température de 70-250°C, et la température dans le procédé de régénération est maintenue à l'aide d'un transporteur de chaleur sous une pression allant jusqu'à 18 bar.

15. Procédé selon l'une des revendications 10 à 14, dans lequel le flux de CO₂ extrait quittant la colonne de désorption est refroidi pour obtenir un flux de CO₂ résiduel de grande pureté à l'aide d'un agent de refroidissement.

16. Procédé selon la revendication 15, dans lequel le refroidissement est effectué jusqu'à une température de 10-40oC dans un échangeur de chaleur (225, 325, 425).

17. Procédé selon la revendication 15 ou 16, dans lequel ils sont utilisés, comme agent de refroidissement, des flux de procédé provenant de refroidisseurs à absorption, alimentés par de la vapeur d'eau sous une pression allant jusqu'à 18 bars, de préférence de 2 à 4 bars, et/ou des flux de réaction liquides et/ou gazeux provenant du procédé de production de soude et/ou des flux de réaction liquides et/ou gazeux et/ou de l'eau.

18. Procédé selon l'une des revendications 8 à 17, dans lequel l'unité supplémentaire de récupération du CO₂ contient des remplissages coulés ou structurels pour fournir une surface de contact suffisamment développée pour la phase liquide de l'absorbant avec la phase gazeuse du gaz de traitement.
